# EUROPÄISCHE PATENTANMELDUNG

(11) **EP 2 775 561 A1**
(43) Veröffentlichungstag der Anmeldung: **10.09.2014**
(21) Anmeldenummer: 13158364.3
(22) Anmeldetag: 08.03.2013
(51) Int. Cl.: H01Q 1/22, H01Q 1/24, H01Q 7/00, H04B 5/00

(54) **NFC-Kopplungsantenne**

(71) Anmelder: Pensold, Andreas, 8045 Graz (AT); Schriebl, Markus, 8580 Köflach - Piber (AT)
(72) Erfinder: Pensold, Andreas, 8045 Graz (AT); Schriebl, Markus, 8580 Köflach - Piber (AT)
(74) Vertreter: Schwarz & Partner

(57) **Zusammenfassung**

Die Erfindung betrifft ein Anpassungseinrichtung (10) zum Anpassen des elektromagnetischen Kommunikationsfeldes einer Readerantenne (3) eines Readers (2) an das elektromagnetische Kommunikationsfeld einer Transponderantenne (5, 8) eines insbesondere passiven Transponders (4, 7), bei der eine erste Antenne (11) vorgesehen ist, deren geometrische Form und Größe im Wesentlichen mit der geometrischen Form und Größe der Readerantenne (3) des Readers (1) übereinstimmt und bei der eine zweite Antenne (12) vorgesehen ist, deren geometrische Form und Größe im Wesentlichen mit der geometrischen Form und Größe der Transponderantenne (8) des passiven Transponders (7) übereinstimmt, wobei sich die erste Antenne (11) und die zweite Antenne (12) in Form und/oder Größe unterscheiden und zur Signalübertragung miteinander verbunden sind.

## Beschreibung

Die Erfindung betrifft eine Anpassungseinrichtung zum Anpassen des elektromagnetischen Kommunikationsfeldes einer Readerantenne eines Readers an das elektromagnetische Kommunikationsfeld einer Transponderantenne eines insbesondere passiven Transponders.

Das Dokument EP 1 488 375 B1 offenbart ein Mobiltelefon mit einem solchen Reader, der zum Kommunizieren mit einem passiven Transponder in einer Smart Card oder in einem Tag und zum Kommunizieren mit aktiven, eine eigene Energiequelle aufweisenden anderen Readern ausgebildet ist. Eine solche Kommunikation ist beispielsweise von dem internationalen Standard ISO18.092 auch unter der Bezeichnung "Near Field Communication" (NFC) bekannt.

In Mobiltelefonen der neueren Generationen wird immer häufiger Hardware eingebaut, die eine Nutzung der NFC-Technologie ermöglicht. Die Readerantenne des NFC-Readers befindet sich in aller Regel auf der Rückseite des Gehäuses so, dass die Bedienung des Mobiltelefons bei gleichzeitiger Nutzung des NFC-Readers möglich ist.

Aus technischen Aspekten heraus ist es sinnvoll die Readerantenne eines NFC-Readers von der Größe her ähnlich zu dimensionieren, wie die Transponderantenne des Transponders, mit dem kommuniziert werden soll. Bei einem Größenverhältnis der beiden Antennen von nahezu 1:1, ist eine Erfassung und Einkopplung des Transponders in das Kommunikationsfeld des NFC-Readers am effektivsten. Weil davon ausgegangen wird, dass innerhalb der NFC-Technologie in Verbindung mit dem Mobiltelefon häufig Transponder im Scheckkarten-Format eingesetzt werden, wurde das Antennenformat der Readerantenne bezüglich Form und Größe innerhalb der Mobiltelefone entsprechend optimiert.

Bei den bekannten Mobiltelefonen mit NFC-Readern hat sich der Nachteil ergeben, dass kleinere Transponder mit entsprechend kleineren Antennen nicht oder nur sehr schlecht, also eher zufällig nach längerem Probieren, erfasst werden können. Da in zahlreichen Applikationen, wie beispielsweise Plagiatsschutz von Luxusgütern (Schmuck, Uhren, etc.), ein möglichst kleiner Transponder zum Einsatz kommt, kann der NFC-Reader in dem bekannten Mobiltelefon nur unzufriedenstellend für solche Applikationen genutzt werden.

Der Erfindung liegt die Aufgabe zugrunde eine technische Möglichkeit zu schaffen bestehende Mobiltelefone mit Readern mit einer bestimmten vorgegebenen Form und Größe der Readerantenne derart anzupassen, dass diese auch für Applikationen mit Transpondern anderer Baugröße, als für die die Readerantenne optimiert ist, genutzt werden können. Weiters sollen Mobiltelefone neuerer Generation gleich mit Readern ausgestattet werden, die für Transponder mit unterschiedlichen Baugrößen optimiert sind.

Erfindungsgemäß wird diese Aufgabestellung durch eine Anpassungseinrichtung gelöst, bei der eine erste Antenne vorgesehen ist, deren geometrische Form und Größe im Wesentlichen mit der geometrischen Form und Größe der Readerantenne des Readers übereinstimmt, und bei der eine zweite Antenne vorgesehen ist, deren geometrische Form und Größe im Wesentlichen mit der geometrischen Form und Größe der Transponderantenne des passiven Transponders übereinstimmt, wobei sich die erste Antenne und die zweite Antenne in Form und/oder Größe unterscheiden und zur Signalübertragung miteinander verbunden sind.

Durch das Vorsehen der Anpassungseinrichtung ist der Vorteil erhalten, dass mit der an die Readerantenne angepassten ersten Antenne besonders viel Empfangsenergie aus dem elektromagnetischen Kommunikationsfeld ausgekoppelt wird, um ein starkes Empfangssignal mit der Anpassungseinrichtung weiterverarbeiten zu können. Dieses Empfangssignal wird in weiterer Folge über die bezüglich ihrer Form und Größe an die Transponderantenne angepasste zweite Antenne abgegeben, wodurch mit der Transponderantenne in dem Transponder wiederum besonders viel Empfangsenergie aus dem elektromagnetischen Kommunikationsfeld der zweiten Antenne ausgekoppelt wird. Hierdurch kann die Signalqualität des in dem Transponder empfangenen Informationssignals aber auch die Signalqualität des in dem Reader von dem Transponder empfangenen Informationssignals auch bei relativ großer Entfernung des Readers zum Transponder wesentlich verbessert werden.

Besonders vorteilhaft ist weiters, dass durch das Vorsehen der Anpassungseinrichtung in dem elektromagnetischen Kommunikationsfeld des Readers die Kommunikation mit einem Transponder, für den die Readerantenne angepasst ist, weiterhin gut funktioniert und mit einem anderen Transponder, für den die zweite Antenne der Anpassungseinrichtung angepasst ist, wesentlich verbessert und auch parallel möglich ist.

Weitere vorteilhafte Ausgestaltungen der erfindungsgemäßen Anpassungseinrichtung werden im Folgenden anhand der Figuren näher erläutert.
Figur 1 zeigt das Schaltbild eines Systems mit einer Anpassungseinrichtung.
Figur 2 zeigt eine Schutzhülle eines Mobiltelefons mit einer Anpassungseinrichtung.

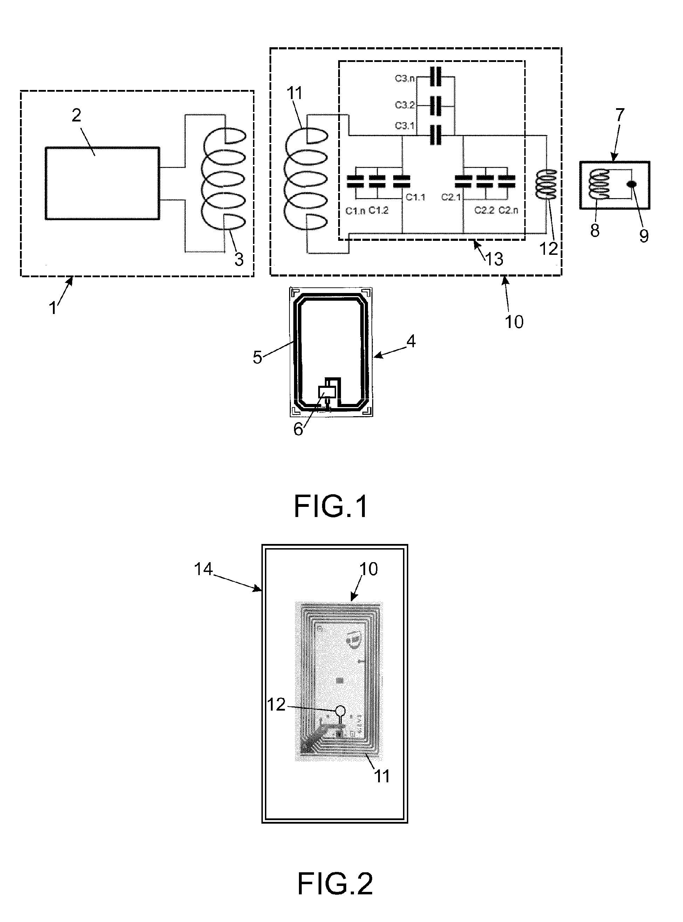

Figur 1 zeigt ein Mobiltelefon 1, von dem allerdings nur der in dem Mobiltelefon 1 vorgesehene Reader 2 mit der an den Reader 2 angeschlossenen Readerantenne 3 dargestellt ist. Der Reader 2 ist zum kontaktlosen Kommunizieren mit einem oder mehreren in seinem elektromagnetischen Kommunikationsfeld befindlichen passiven Transpondern ausgebildet. Der Reader 2 entspricht dem NFC Standard (ISO19.092) und kommuniziert im HF Frequenzbereich. Eine solcher Reader könnte aber erfindungsgemäß auch zur kontaktlosen Kommunikation in anderen Frequenzbereichen (z.B. kHz und UHF) ausgebildet sein und entsprechend anderen Standards kommunizieren (z.B. ISO14.443; ISO15.693).

In dem Mobiltelefon 1 ist eine Applikation realisiert, mit der der Benutzer des Mobiltelefons 1 ein Produkt online kaufen und mit seiner Kreditkarte 4 bezahlen kann.

Hierfür hält der Benutzer seine Kreditkarte 4 in das elektromagnetische Kommunikationsfeld der Readerantenne 3, die in Form und Größe im Wesentlichen der Form und Größe der Transponderantenne 5 der Kreditkarte 4 entspricht. Durch diese Übereinstimmung der Readerantenne 3 mit der Transponderantenne 5 ist gewährleistet, dass die Transponderantenne 5 von im Wesentlichen dem gesamten elektromagnetischen Kommunikationsfeld der Readerantenne 3 durchdrungen wird, wodurch in der Transponderantenne 5 ein qualitativ hochwertiges Informationssignal gewonnen und mit dem Transponder-IC 6 weiter verarbeitet werden kann.

In dem Mobiltelefon 1 ist eine weitere Applikation realisiert, mit der in Form von Tags 7 realisierte Transponder ausgelesen werden können. Tags 7 werden beispielsweise zum Plagiatsschutz von Luxusgütern (Schmuck, Uhren, etc.), aber auch zum Kennzeichnen von Hunden oder Rindern eingesetzt. Diese Tags 7 sind besonders klein, weshalb auch die Transponderantennen 8 wesentlich kleiner und in ihrer Form oft an die Form des Tags 7 angepasst sind. Das von der Readerantenne 3 abgegebene elektromagnetische Kommunikationsfeld ist relativ großflächig und erzeugt in sehr kleinen Transponderantennen 8 nur eine geringe Signalamplitude des Informationssignals. Folglich steht dem Tag-IC 9, auch bei nahe an dem Mobiltelefon befindlichem Tag 7, nur ein qualitativ schlechtes Informationssignal zur Weiterverarbeitung zur Verfügung.

Gemäß dem Ausführungsbeispiel in Figur 1 ist nunmehr eine Anpassungseinrichtung 10 zum Anpassen des elektromagnetischen Kommunikationsfeldes der Readerantenne 3 des Readers 1 an das elektromagnetische Kommunikationsfeld der Transponderantenne 8 des passiven Tags 7 vorgesehen. Die Anpassungseinrichtung 10 weist eine erste Antenne 11 auf, deren geometrische Form und Größe im Wesentlichen mit der geometrischen Form und Größe der Readerantenne 3 des Readers 1 übereinstimmt. Die Anpassungseinrichtung 10 weist weiters eine zweite Antenne 12 auf, deren geometrische Form und Größe im Wesentlichen mit der geometrischen Form und Größe der Transponderantenne 8 des passiven Tags 7 übereinstimmt. Die Readerantenne 3 und die erste Antenne 11 sind in Figur 1 nur symbolisch dargestellt und weisen im Wesentlichen die rechteckige Form der Transponderantenne 5 der Kreditkarte 4 auf, da die Readerantenne 3 für die Kommunikation mit Smart Cards, wie der Kreditkarte 4, optimiert ist. Die Transponderantenne 8 des Tags 7 und die zweite Antenne 12 sind gemäß diesem Ausführungsbeispiel kreisförmig ausgebildet und weisen einen im Vergleich zu der Transponderantenne 5 der Kreditkarte 4 kleinen Durchmesser auf. Die erste Antenne 11 und die zweite Antenne 12 unterscheiden sich folglich sowohl in Form als auch in ihrer Größe.

Die Anpassungseinrichtung 10 weist weiters eine Anpassungsschaltung 13 auf, über die die erste Antenne 11 mit der zweiten Antenne 12 verbunden ist und die zum Einstellen der Resonanzfrequenzen der Antenneschwingkreise vorgesehen ist. Mittels der Anpassungsschaltung 13 findet eine leitungsgebundene Signalübertragung zwischen der ersten Antenne 11 und der zweiten Antenne 12 statt. Die Anpassungsschaltung 13 weist mehrere parallel geschaltete Kondensatorgruppen C1.n bis C3.n auf, um die Resonanzfrequenzen der Antenneschwingkreise der ersten Antenne 11 und der zweiten Antenne 12 einzustellen.

Durch das Vorsehen der Anpassungseinrichtung 10 ist nunmehr der Vorteil erhalten, dass das Mobiltelefon 1 mittels des Readers 2 nicht nur mit Transpondern im Scheckkarten-Format sondern auch mit Transpondern im Tag-Format mit guter Signalübertragungsqualität kommunizieren kann. Somit erhöht sich die Anzahl der mit dem Mobiltelefon realisierbaren Applikationen wesentlich. So könnte beispielweise mit einem Mobiltelefon mit NFC-Reader die Seriennummer des Tags in einer möglicherweise gefälschten Tasche überprüft und Plagiaten auf die Spur gekommen werden ohne, dass hierfür spezielle Reader vorgesehen sein müssten. Ebenso könnte mit dem Mobiltelefon mit NFC-Reader die Seriennummer des Tags an dem Eingang eines historischen Gebäudes ausgelesen werden, um nähere Informationen über das Gebäude auf dem Mobiltelefon angezeigt zu bekommen, ohne, dass hierfür spezielle Reader vorgesehen sein müssten.

Eine solche Anpassungseinrichtung ist ein rein passives Bauteil und könnte beispielsweise auf einer selbstklebenden Folie vorgesehen sein. Die Folie könnte vom Benutzer des Mobiltelefons 1 an die passende Stelle der Rückwand des Gehäuses geklebt werden, wobei die erste Antenne 11 möglichst in Deckung mit der Readerantenne 3 im Mobiltelefon 1 liegen soll, um eine gute Durchdringung der ersten Antenne 1 mit dem elektromagnetischen Kommunikationsfeld der Readerantenne 3 zu erreichen. Hierdurch kann jedes Mobiltelefon mit einer an eine bestimmte Applikation angepassten Readerantenne 3 durch einfaches Aufkleben der geeigneten selbstklebenden Folie für weitere Applikationen vorbereitet werden.

Als besonders vorteilhaft hat sich herausgestellt, dass durch das Vorsehen der Anpassungseinrichtung 10 von der zweiten Antenne 12 so viel Energie in die Transponderantenne 8 eingekoppelt wird, dass auch Transponder 7 ausgelesen und beschrieben werden können, die an übertragungstechnisch problematischen Stellen, wie metallischen Oberflächen, angebracht sind. Es ist sogar möglich einen in ein Metall eingelassenen Tag auszulesen, was mit herkömmlichen NFC Readern nicht möglich wäre. Hierdurch ergibt sich ein weites Feld neuer möglicher NFC Applikationen.

In Figur 2 ist eine nachrüstbare Schutzhülle 14 für das Mobiltelefon 1 dargestellt, in der die Anpassungseinrichtung 10 an der für das jeweilige Modell des Mobiltelefons 1 passenden Stelle vorgesehen ist. Die Anpassungseinrichtung kann in dem Kunststoff der Schutzhülle eingegossen oder mittels Klebefolie eingeklebt vorgesehen sein.

Gemäß einem weiteren Ausführungsbeispiel wäre die zweite Antenne der Anpassungseinrichtung über eine lösbare Verbindung mit der Anpassungsschaltung und somit auch mit der ersten Antenne verbunden. Hierdurch ist erreicht, dass die zweite Antenne zur Anpassung der Anpassungseinrichtung an unterschiedliche Formen und/oder Größen von Transponderantennen ausgewechselt werden kann. Es kann sein, dass beim Austausch der zweiten Antenne auch die Anpassungsschaltung ausgetauscht werden muss. Vorteilhafterweise können regelbare Kondensatoren in der Anpassungsschaltung zum Einsatz kommen so, dass der Austausch der Anpassungsschaltung entfällt und beim Austausch der zweiten Antenne nur eine Einstellung der regelbaren Kondensatoren erfolgt.

Grundsätzlich kann die zweite Antenne 12 überall an dem Mobiltelefon vorgesehen sein, also beispielsweise auf der Rückwand, an einer Ecke und auch vorne. Gemäß einem weiteren Ausführungsbeispiel sind zumindest zwei oder mehr zweite Antennen 12 vorgesehen, die sich in Form und/oder Größe unterscheiden und über die das elektromagnetische Kommunikationsfeld der Readerantenne an zumindest zwei unterschiedliche Transponderantennen parallel angepasst wird. Um eine besonders gute Qualität der Kommunikation zu erreichen, könnte ein Transponder für eine bestimmte Applikation an die passende Stelle der Anpassungseinrichtung bzw. der Rückwand des Mobiltelefons gehalten werden, die durch die Stelle gegeben ist, an der die zweite Antenne mit im Wesentlichen derselben Form und Größe vorgesehen ist. Diese Stelle könnte an der Klebefolie der Anpassungseinrichtung für den Benutzer markiert sein.

Zum Auslesen von Transpondern, die Transponderantennen mit unterschiedlicher Form und Größe aufweisen, werden somit folgende Verfahrensschritte durchgeführt. Die zu übertragenden Informationen werden von der Readerantenne 3 an die erste Antenne 11 der Anpassungseinrichtung 10 kontaktlos übertragen, wobei die Readerantenne 3 und die erste Antenne 11 im Wesentlichen die gleiche geometrischen Form und Größe aufweisen. Anschließend werden die von der ersten Antenne 11 empfangenen Informationen leitungsgebunden über die Anpassungsschaltung 13 an die zweite Antenne 12 der Anpassungseinrichtung 10 übertragen. Bei einem letzten Verfahrensschritt werden die Informationen von der zweiten Antenne 12 der Anpassungseinrichtung 10 an die Transponderantenne 8 kontaktlos übertragen, wobei die Transponderantenne 8 und die zweite Antenne 12 im Wesentlichen die gleiche geometrischen Form und Größe aufweisen und sich die erste Antenne 11 und die zweite Antenne 12 in Form und/oder Größe unterscheiden.

Es kann erwähnt werden, dass erste Antennen und zweite Antennen auch an weitere andere Formen, wie beispielsweise oval, dreieckig oder linear, von Readerantennen und Transponderantennen angepasst vorgesehen sein könnten.

Es kann erwähnt werden, dass die Anpassungseinrichtung auch zum Anpassen des elektromagnetischen Kommunikationsfeldes eines aktiven Transponders und eines anderen Readers verwendet werden kann, welche Kommunikationsarten beispielweise gemäß dem NFC Standard vorgesehen sind.

Es kann erwähnt werden, dass eine vorstehend beschriebene Anpassungseinrichtung auch in oder an anderen elektronischen Geräten vorgesehen sein kann, die einen Reader aufweisen. Auch wäre es möglich bei neuen Geräten die Anpassungseinrichtung gleich im Gehäuse des Readers oder des Mobiltelefons vorzusehen.

Es kann erwähnt werden, dass als im Wesentlichen mit der gleichen Form und Größe in diesem Zusammenhang gemeint ist, dass die Antennen nicht mehr als 30% und insbesondere nicht mehr als 10% beziehungsweise 5% voneinander abweichen.

Gemäß einem weiteren Ausführungsbeispiel der Erfindung ist die zweite Antenne in Form einer Verlängerung, wie beispielsweise einem flexiblen Stab oder Schlauch, ausgebildet. Mit dieser Verlängerung wären sogar Transponder mit dem Reader des Mobiltelefons auslesbar, die in Löchern versenkt angeordnet sind. Dies ist insbesondere vorteilhaft, wenn es sich um ein Loch in einem metallischen Gegenstand handelt.

## Patentansprüche

1. Anpassungseinrichtung (10) zum Anpassen des elektromagnetischen Kommunikationsfeldes einer Readerantenne (3) eines Readers (2) an das elektromagnetische Kommunikationsfeld einer Transponderantenne (5, 8) eines insbesondere passiven Transponders (4, 7), **dadurch gekennzeichnet, dass** eine erste Antenne (11) vorgesehen ist, deren geometrische Form und Größe im Wesentlichen mit der geometrischen Form und Größe der Readerantenne (3) des Readers (2) übereinstimmt und, dass eine zweite Antenne (12) vorgesehen ist, deren geometrische Form und Größe im Wesentlichen mit der geometrischen Form und Größe der Transponderantenne (8) des passiven Transponders (7) übereinstimmt, wobei sich die erste Antenne (11) und die zweite Antenne (12) in Form und/oder Größe unterscheiden und zur Signalübertragung miteinander verbunden sind.

2. Anpassungseinrichtung (10) gemäß Anspruch 1, **dadurch gekennzeichnet, dass** die erste Antenne (11) im Wesentlichen rechteckförmig in der Größe einer Scheckkarte ausgebildet ist.

3. Anpassungseinrichtung (10) gemäß einem der vorherigen Ansprüche, **dadurch gekennzeichnet, dass** die zweite Antenne (12) im Wesentlichen kreisförmig und in ihrer Größe kleiner als die erste Antenne (11) ausgebildet ist.

4. Anpassungseinrichtung (10) gemäß einem der vorherigen Ansprüche, **dadurch gekennzeichnet, dass** eine zumindest ein kapazitives Element (C1.n bis C3.n) aufweisende Anpassungsschaltung (13) vorgesehen ist, über die die erste Antenne (11) mit der zweiten Antenne (12) verbunden ist und die zum Einstellen der Resonanzfrequenzen der Antenneschwingkreise vorgesehen ist.

5. Anpassungseinrichtung (10) gemäß einem der vorherigen Ansprüche, **dadurch gekennzeichnet, dass** die Anpassungseinrichtung (10) als passives Bauteil in einer insbesondere selbstklebenden Folie vorgesehen ist.

6. Anpassungseinrichtung (10) gemäß einem der vorherigen Ansprüche, **dadurch gekennzeichnet, dass** die Anpassungseinrichtung (10) als Schutzhülle (14) eines Mobiltelefons (1) ausgebildet ist, in der die erste Antenne (11) im Wesentlichen an der Position vorgesehen ist, an der in dem Mobiltelefon (1) die Readerantenne (3) des Readers (2) vorgesehen ist.

7. Anpassungseinrichtung (10) gemäß einem der vorherigen Ansprüche, **dadurch gekennzeichnet, dass** die zweite Antenne (12) über eine lösbare Verbindung mit der ersten Antenne (11) verbunden ist, um ein Auswechseln der zweiten Antenne (12) zur Anpassung der Anpassungseinrichtung (10) an unterschiedliche Formen und/oder Größen von Transponderantennen (5, 8) zu ermöglichen.

8. Anpassungseinrichtung (10) gemäß einem der vorherigen Ansprüche, **dadurch gekennzeichnet, dass** zumindest zwei zweite Antennen vorgesehen sind, die sich in Form und/oder Größe unterscheiden und über die das elektromagnetische Kommunikationsfeld der Readerantenne (3) an zumindest zwei unterschiedliche Transponderantennen (8) parallel angepasst wird.

9. Mobiltelefon (1) mit einem Reader (2) zum Aufbau eines elektromagnetischen Kommunikationsfeldes mit einer Readerantenne (3), **dadurch gekennzeichnet, dass** in dem Mobiltelefon (1) eine Anpassungseinrichtung (10) gemäß einem der Ansprüche 1 bis 8 vorgesehen ist.

10. System bestehend aus einem Reader (2) mit einer Readerantenne (3) und einem insbesondere passiven Transponder (4, 7) mit einer Transponderantenne (5, 8) zum Übertragen von Informationen zwischen dem Reader (2) und dem passiven Transponder (4, 7), **dadurch gekennzeichnet, dass**
im Bereich des elektromagnetischen Kommunikationsfelds der Readerantenne (3) eine Anpassungseinrichtung (10) gemäß einem der Ansprüche 1 bis 8 vorgesehen ist.

11. Verfahren zur Verbesserung der kontaktlosen Übertragung von Informationen zwischen einer Readerantenne (3) eines Readers (2) und einer Transponderantenne (8) eines insbesondere passiven Transponders (7), **dadurch gekennzeichnet, dass** die Informationen von der Readerantenne (3) an eine erste Antenne (11) einer Anpassungseinrichtung (10) kontaktlos übertragen werden, wobei die Readerantenne (3) und die erste Antenne (11) im Wesentlichen die gleiche geometrischen Form und Größe aufweisen, und, dass
die von der ersten Antenne (11) empfangenen Informationen leitungsgebunden an eine zweite Antenne (12) der Anpassungseinrichtung (10) übertragen werden und, dass die Informationen von der zweiten Antenne (12) der Anpassungseinrichtung (10) an die Transponderantenne (8) kontaktlos übertragen werden, wobei die Transponderantenne (8) und die zweite Antenne (12) im Wesentlichen die gleiche geometrischen Form und Größe aufweisen und sich die erste Antenne (11) und die zweite Antenne (12) in Form und/oder Größe unterscheiden.
